# FASCICULE DE BREVET EUROPEEN

(11) **EP 2 242 908 B1**
(45) Date de publication et mention de la délivrance du brevet: **02.11.2011**
(21) Numéro de dépôt: 09709923.8
(22) Date de dépôt: 13.02.2009
(51) Int. Cl.: F01D 5/04, F03B 3/12, F03B 3/02

(54) **ROUE POUR MACHINE HYDRAULIQUE ET MACHINE HYDRAULIQUE COMPRENANT UNE TELLE ROUE**
RAD FÜR HYDRAULISCHE MASCHINE, HYDRAULISCHE MASCHINE MIT SOLCH EINEM RAD UND ENERGIEUMWANDLUNGSANLAGE MIT SOLCH EINER HYDRAULISCHEN MASCHINE
WHEEL FOR HYDRAULIC MACHINE, HYDRAULIC MACHINE INCLUDING SUCH WHEEL, AND ENERGY CONVERSION PLANT INCLUDING SUCH HYDRAULIC MACHINE

(30) Priorité: 15.02.2008 FR 0850995
(43) Date de publication de la demande: 27.10.2010
(73) Titulaire: Alstom Hydro France, 92300 Levallois Perret (FR)
(72) Inventeur: MAZZOUJI, Farid, F-38210 Vourey (FR); COUSTON, Michel Henri, F-38180 Seyssins (FR); HOUDELINE, Jean Bernard, F-38850 Chirens (FR); LAVIGNE, Sylvain, F-38320 Eybens (FR); SEGOUFIN, Claire, F-38000 Grenoble (FR)
(74) Mandataire: Myon, Gérard Jean-Pierre
(86) Numéro de dépôt international: PCT/FR2009/050231
(87) Numéro de publication internationale: WO 2009/101371

(56) Documents cités:
- EP-A- 0 356 821
- FR-A- 2 011 959
- JP-A- 2005 048 608

## Description

La présente invention concerne une roue de type Francis pour machine hydraulique destinée à être traversée par un écoulement forcé d'eau. Un tel écoulement a pour effet d'entraîner la roue en rotation, lorsque la machine est une turbine. Un tel écoulement résulte de cette rotation, lorsque la machine est une pompe. Par ailleurs, la présente invention concerne une machine hydraulique comprenant une telle roue. D'autre part, la présente invention se rapporte à une installation de conversion d'énergie équipée d'une telle machine hydraulique.

JP-A-2005 48608 décrit une roue, pour machine hydraulique de type turbine-pompe, qui comporte une couronne axisymétrique et une pluralité d'aubes incurvées et solidaires de la couronne et présentant chacune un bord d'attaque périphérique externe et un bord de fuite central interne. Le raccordement de la couronne avec le bord central interne d'une aube sur deux est situé sur un premier cercle de grand rayon, tandis que le raccordement de la couronne avec le bord central interne d'une aube adjacente est situé sur un deuxième cercle de plus petit rayon. Dans la région périphérique externe de la roue, les raccordements de la couronne avec les aubes dont le bord central interne se trouve sur le premier cercle sont situées sur la périphérie de la couronne, tandis que les raccordements de la couronne avec les aubes adjacentes, dont le bord central se trouve sur le deuxième cercle de petit rayon, sont situés en retrait de la périphérie de la couronne. Cette géométrie particulière de la roue de JP-A-2005 48 608 est destinée à réduire la cavitation survenant à l'entrée de la turbine, c'est-à-dire à la périphérie de la roue, lorsque la machine hydraulique fonctionne en régime permanent, de façon à augmenter son rendement hydraulique en régime permanent.

Dans les régimes transitoires qui suivent la mise en route ou qui précédent l'arrêt en mode turbine d'une machine hydraulique de l'art antérieur, la roue subit des efforts radiaux tournants et asynchrones qui tendent à la « désaxer ». Dans les régimes transitoires, ces efforts radiaux exercés sur la roue engendrent des niveaux de contrainte mécanique qui peuvent être très importants et qui conditionnent donc le dimensionnement des composants de la machine hydraulique, tels que son arbre ou ses paliers. Le coût de ces composants est donc nécessairement augmenté du fait de tels efforts radiaux.

La présente invention vise notamment à remédier à cet inconvénient, en proposant une roue dont la géométrie atténue, voire évite, la génération d'efforts radiaux tournants lors des régimes transitoires.

A cet effet, l'invention a pour objet une roue de type Francis pour machine hydraulique destinée à être traversée par un écoulement forcé d'eau, comportant :
- une couronne à symétrie de révolution autour de l'axe de rotation de la roue ;
- une pluralité d'aubes incurvées, solidaires de la couronne et présentant chacune un bord périphérique externe et un bord central interne ;
**caractérisée en ce que** les points de raccordement de la couronne avec les bords centraux internes des aubes sont globalement situés sur un même cercle centré sur ledit axe et en ce que les points de raccordement de la couronne avec les bords périphériques externes des aubes sont situés sur au moins deux cercles distincts centrés sur ledit axe.

Une telle géométrie de la roue introduit une dissymétrie azimutale, ce qui permet de réduire significativement les efforts radiaux subis par la roue en régime transitoire.

Selon d'autres caractéristiques avantageuses mais facultatives de l'invention, prises isolément ou selon toute combinaison techniquement admissible :
- les points de raccordement de la couronne avec les bords périphériques externes des aubes sont situés sur deux cercles distincts centrés sur ledit axe, des aubes dites longues présentant des points de raccordement situés sur un premier cercle, des aubes dites courtes présentant des points de raccordement situés sur un deuxième cercle dont le diamètre est inférieur au diamètre du premier cercle ;
- la roue comporte, en outre, un plafond à symétrie de révolution autour dudit axe et situé en regard de ladite couronne, les aubes étant solidaires du plafond, les points de raccordement du plafond avec les bords centraux internes des aubes sont situés sur un même cercle centré sur l'axe et les points de raccordement du plafond avec les bords périphériques externes des aubes sont situés sur au moins deux cercles distincts centrés sur ledit axe ;

- les points de raccordement du plafond avec les bords périphériques externes des aubes sont situés sur deux cercles distincts centrés sur l'axe ;
- les aubes courtes, d'une part, et les aubes longues, d'autre part, sont réparties régulièrement autour dudit axe ;
- la roue comporte neuf aubes, dont six longues et trois courtes, les aubes courtes étant disposées sur la couronne avec un écart angulaire de 120°;
- la roue présente un nombre d'aubes pair et une aube sur deux est une aube courte ;
- chaque aube courte présente une longueur développée comprise entre 50% et 99% de la longueur développée d'une aube longue, de préférence entre 70% et 85%.

Par ailleurs, l'invention a pour objet une machine hydraulique, **caractérisée en ce qu'**elle comprend une roue telle qu'exposée ci-dessus.

Les composants d'une machine hydraulique conforme à l'invention peuvent donc être dimensionnés pour des contraintes mécaniques, donc un coût, inférieurs, à performances égales pour la machine hydraulique.

D'autre part, l'invention a pour objet une installation de conversion d'énergie, qui est équipée d'au moins une machine hydraulique telle qu'exposée ci-dessus.

Une installation de conversion d'énergie conforme à l'invention est donc moins coûteuse, à performances égales, que les installations de l'art antérieur.

L'invention sera bien comprise et d'autres avantages de celle-ci ressortiront aussi à la lumière de la description qui va suivre, donnée à titre d'exemple non limitatif et faite en référence aux dessins annexés, dans lesquels :
- la figure 1 est une coupe de principe d'une installation de conversion d'énergie conforme à l'invention, équipée d'une machine hydraulique conforme à l'invention comprenant une roue conforme à l'invention ;
- la figure 2 est une coupe schématique de la roue seule suivant la ligne brisée II à la figure 1 ;
- la figure 3 est une coupe schématique de la roue seule suivant la ligne brisée III à la figure 1 ; et
- la figure 4 est une vue en perspective partielle de la roue de la figure 2.

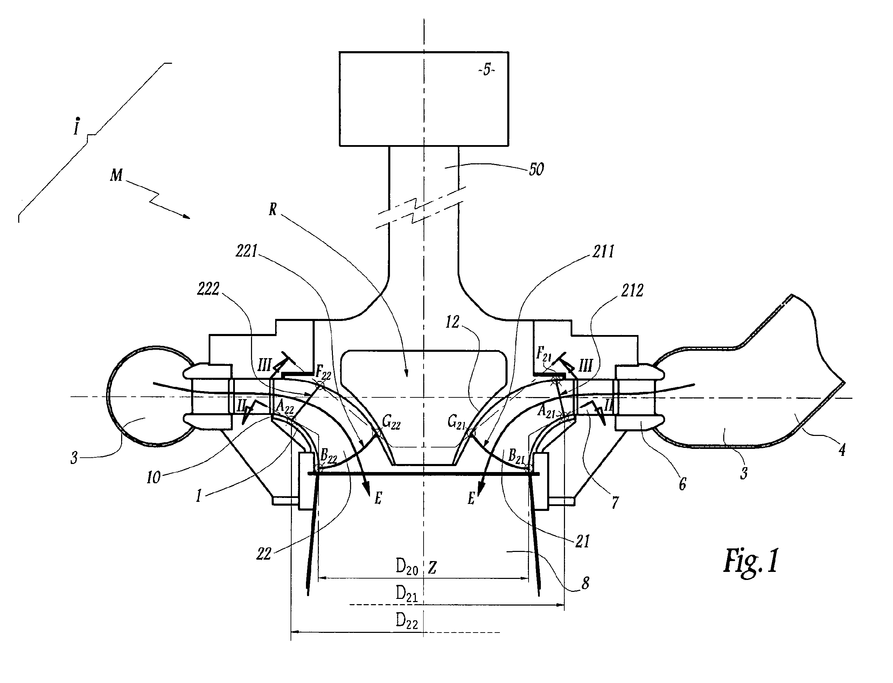

L'installation i représentée à la figure 1 comprend une machine hydraulique réversible M, qui est une turbine-pompe de type Francis, dont la roue R est alimentée en eau à partir d'une bâche 3 dans laquelle débouche une conduite forcée 4. En service, la roue R tourne autour d'un axe de rotation Z vertical. Pour produire de l'électricité en mode turbine, la machine M est couplée à un alternateur 5 par un arbre 50 tournant autour de l'axe Z. Entre la bâche 3 et la roue R sont disposées des avant-directrices 6 statiques et des directrices 7 orientables, dont la fonction est de guider un écoulement et de réguler le débit d'eau E, provenant de la conduite 4 et destiné à traverser la roue R, en direction d'un conduit d'évacuation 8.

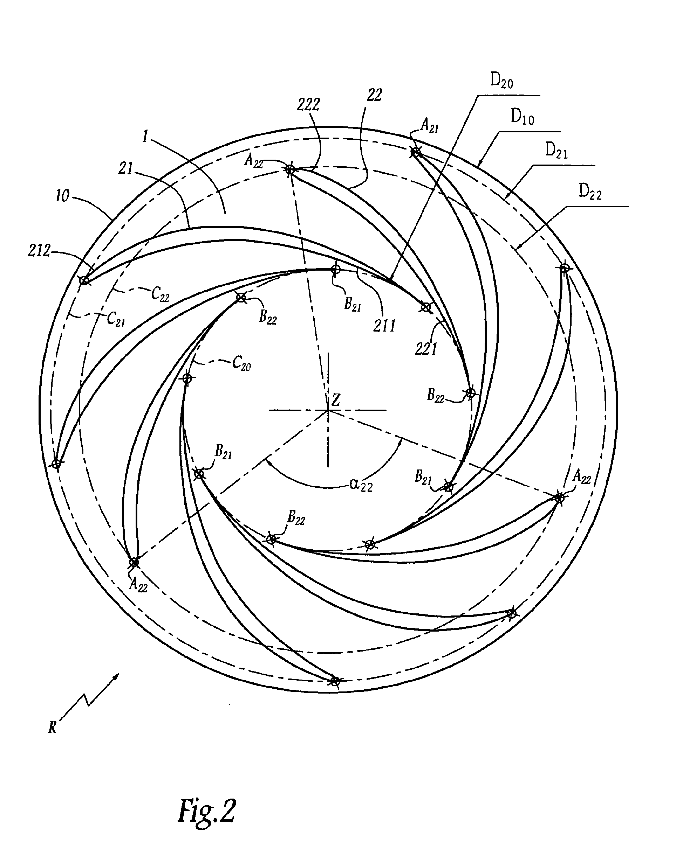

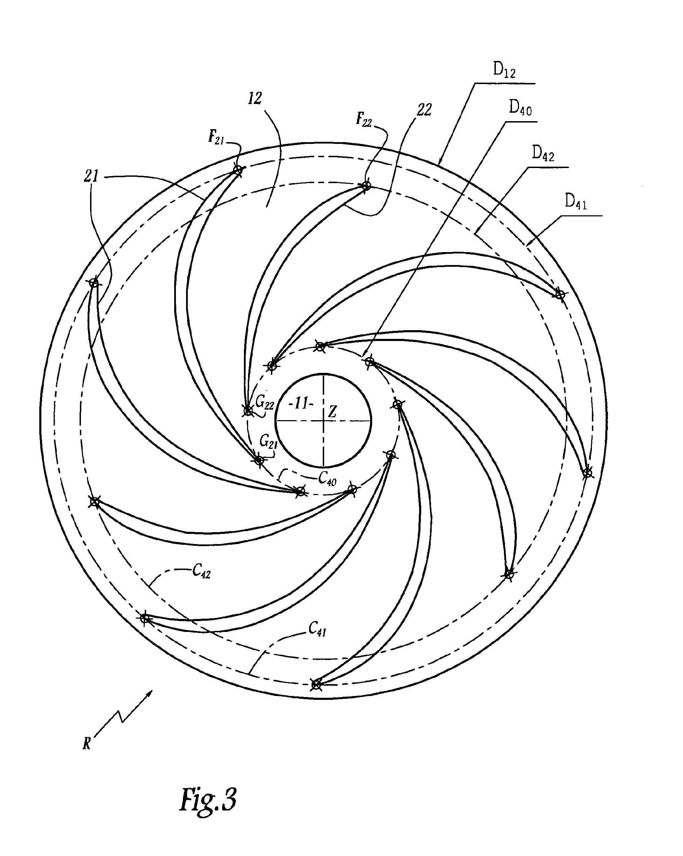

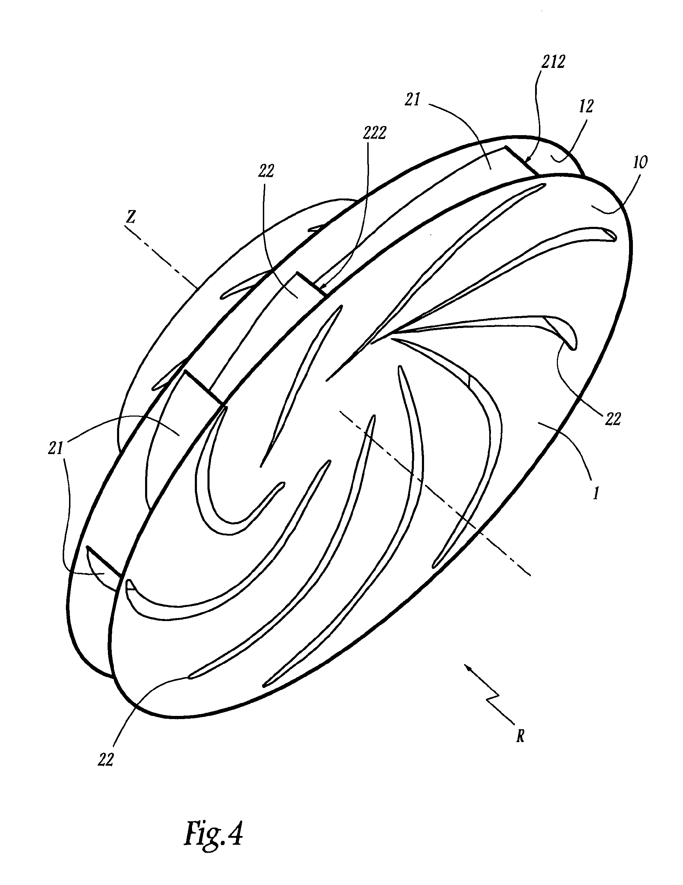

La figure 2 illustre une partie de la roue R qui comporte une couronne 1 à symétrie de révolution autour de l'axe Z. La couronne 1 présente un bord périphérique externe 10 de diamètre D₁₀. La figure 3 illustre une partie de la roue R qui comporte un plafond 12, lequel délimite un trou central 11. Le plafond 12 présente également une symétrie de révolution autour de l'axe Z et il est situé en regard de la couronne 1. On note D₁₂ le diamètre du bord périphérique externe du plafond 12. Le bord périphérique externe 10 et le trou central 11 sont centrés sur l'axe Z. Comme le montrent les figures 1 et 4, les surfaces de la couronne 1 et du plafond 12 présentent des formes gauches, engendrées par la rotation, autour et à distance de l'axe Z, d'un segment de courbe. Toute forme de couronne et de plafond d'une roue conventionnelle de type Francis est adaptée pour définir respectivement les surfaces de la couronne et du plafond d'une roue conforme à l'invention.

La roue R comporte, en outre, neuf aubes 21 et 22 solidaires de la couronne 1 et du plafond 12 et qui s'étendent entre la couronne 1 et le plafond 12 autour de l'axe Z, comme le montrent les figures 4. Chaque aube 21 ou 22 présente une forme incurvée et globalement en forme de portion de spirale. Toute courbure d'aube conventionnelle peut convenir pour définir la courbure d'une aube 21 ou 22. Chaque aube 21 ou 22 présente un bord périphérique, respectivement 212 et 222, situé en périphérie de la couronne 1 et un bord central, respectivement 211 et 221, tourné vers l'axe Z. Un objet est ici qualifié de « central » lorsqu'il se trouve au voisinage de l'axe Z, par opposition à l'adjectif « périphérique » qui désigne un objet qui est éloigné de l'axe Z.

Lorsque la roue R fonctionne en mode turbine, le bord périphérique externe 212 ou 222 forme un bord d'attaque d'une aube 21 ou 22 et le bord central interne 211 ou 221 forme son bord de fuite. La description donnée ci-après pour le mode turbine reprend ces expressions « bord d'attaque » et « bord de fuite » ; elle peut être transposée au cas où la roue fonctionne en mode pompe en inversant ces expressions.

Parmi les neuf aubes 21 et 22 de la roue R, trois aubes 22 présentent une longueur développée inférieure à la longueur développée des six autres aubes 21. Les aubes 22 sont donc qualifiées de « courtes », tandis que les aubes 21 sont qualifiées de « longues ».

Dans une région centrale de la couronne 1, on note respectivement B₂₁ et B₂₂ les points de raccordement de la couronne 1 avec les bords de fuite 211 et 221 de chaque aube 21 ou 22. Les points B₂₁ et B₂₂ sont situés sur un même cercle central de diamètre D₂₀ centré sur l'axe Z. Ainsi, toutes les aubes 21 et 22 s'étendent jusqu'au cercle central C₂₀ de diamètre D₂₀.

Dans une région périphérique de la couronne 1, on note A₂₁ les points de raccordement de la couronne 1 avec les bords d'attaque 212 de chaque aube longue 21. Les points A₂₁ sont situés sur un premier cercle C₂₁ de diamètre D₂₁ centré sur l'axe Z. De même, on note A₂₂ les points de raccordement de la couronne 1 avec les bords d'attaque 222 de chaque aube courte 22. Les points A₂₂ sont situés sur un deuxième cercle C₂₂ centré sur l'axe Z de diamètre D₂₂ inférieur au diamètre D₂₁ du premier cercle. Les points A₂₁ sont donc plus proches du bord 10 de la couronne 1 que les points Au. Les diamètres D₂₁ et D₂₂ respectifs des premier et deuxième cercles C₂, et C₂₂, ainsi que le diamètre D₂₀ du cercle central C₂₀ sont inférieurs au diamètre D₁₀ du bord 10.

En d'autres termes, les aubes courtes 22 s'étendent moins loin vers le bord 10 de la couronne 1 que les aubes longues 21. C'est pourquoi la longueur développée des aubes courtes 22 est inférieure à la longueur développée des aubes longues 21. Ainsi, les points A₂₁ et A₂₂ respectifs des aubes 21 et 22 sont situés sur deux cercles distincts C₂₁ et C₂₂ centrés sur l'axe Z et de diamètres respectifs D₂₁ et D₂₂ différents.

Selon une variante non représentée de l'invention, les points de raccordement de la couronne avec les bords d'attaque peuvent être situés sur plus de deux cercles distincts, par exemple sur trois cercles.

La figure 3 montre l'implantation des aubes 21 et 22 sur le plafond 12 de la roue R. De façon analogue au raccordement de la couronne 1 avec les aubes 21 et 22, dans la région centrale du plafond 12, on note respectivement G₂₁ et G₂₂ les points de raccordement du plafond 12 avec les bords de fuite 211 et 221 de chaque aube 21 ou 22. Les points G₂₁ et G₂₂ sont situés sur un même cercle central C₄₀ de diamètre D₄₀ centré sur l'axe Z. Ainsi, toutes les aubes 21 et 22 s'étendent jusqu'au même cercle central C₄₀ de diamètre D₄₀.

Dans une région périphérique du plafond 12, on note F₂₁ les points de raccordement du plafond 12 avec les bords d'attaque 212 de chaque aube longue 21. Les points F₂₁ sont situés sur un troisième cercle C₄₁ de diamètre D₄₁ centré sur l'axe Z. De même, on note F₂₂ les points de raccordement du plafond 12 avec les bords d'attaque 222 de chaque aube courte 22. Les points F₂₂ sont situés sur un quatrième cercle C₄₂ centré sur l'axe Z et de diamètre D₄₂ inférieur au diamètre D₄₁ du troisième cercle.

En pratique, selon la puissance souhaitée pour la machine hydraulique équipée de la roue R, le diamètre D₁₀ du bord 10 de la couronne 1 peut être compris entre 0,4 m et 10 m. Selon les dimensions sélectionnées pour la couronne 1, le diamètre D₂₁ du premier cercle peut représenter entre 90% et 100% du diamètre D₁₀ et le diamètre D₂₂ du deuxième cercle peut représenter entre 70% et 99%, de préférence entre 80% et 95% du diamètre D₂₁. Selon les dimensions sélectionnées pour le plafond 12, le diamètre D₄₁ du troisième cercle peut représenter entre 90% et 100% du diamètre D₁₂ et le diamètre D₄₂ du quatrième cercle peut représenter entre 70% et 99%, de préférence entre 80% et 95% du diamètre D₄₁.

Selon les caractéristiques de la roue R, notamment ses dimensions et la fréquence de rotation à laquelle elle est destinée à tourner en régime permanent, chaque aube courte 22 peut présenter une longueur développée comprise entre 50% et 99% de la longueur développée d'une aube longue 21. La longueur développée d'une aube longue 21 peut se mesurer entre les points A₂₁ et B₂₁ ou entre les points F₂₁ et G₂₁. De même, la longueur développée d'une aube courte 22 peut se mesurer entre les points A₂₂ et B₂₂ ou entre les points F₂₂ et G₂₂. De préférence, la longueur développée d'une aube courte 22 est comprise entre 70% et 85% de la longueur développée d'une aube longue 21. Ainsi, si une aube longue 21 présente une longueur développée de 1 m, une aube courte 22 peut présenter par exemple une longueur développée de 0,8 m.

Pour assurer un bon équilibrage dynamique de la roue R, les aubes courtes 22, d'une part, et les aubes longues 21, d'autre part, sont réparties régulièrement autour de l'axe de rotation Z de la roue R. En l'occurrence, les trois aubes courtes 22 sont disposées sur la couronne 1 avec un écart angulaire α₂₂ de 120°entre elles. Deux aubes longues 21 sont dis posées à intervalles réguliers entre deux aubes courtes 22 consécutives, avec un écart angulaire de 40° pour deux aubes longues 21 adjacentes et de 80° pour deu x aubes longues 21 entre lesquelles est disposée une aube courte 22.

D'autres répartitions des aubes courtes et longues sont possibles. On peut ainsi prévoir un nombre pair d'aubes, par exemple dix, dont une sur deux est une aube courte et l'autre une aube longue, les aubes courtes et longues étant réparties régulièrement autour de l'axe de rotation de la roue.

Une roue conforme à l'invention permet d'atténuer voire d'éviter les efforts radiaux engendrés sur les roues à aubage conventionnel, notamment lors des régimes transitoires de mise en route ou d'arrêt en mode turbine. Il a été constaté que, de façon surprenante, une roue conforme à l'invention permet de réduire l'intensité des efforts radiaux subis par la roue en régime transitoire. L'optimisation de la géométrie des aubes de la roue en fonction de son application permet de réduire encore davantage cette intensité.

Une machine hydraulique conforme à l'invention présente donc une déflexion radiale de sa roue et de son arbre réduite, voire nulle. Cela réduit donc le coût de la machine hydraulique, car elle peut être dimensionnée de manière réduite.

L'invention a été décrite ici en relation avec une machine hydraulique réversible de type turbine-pompe. Cependant, l'invention s'applique aussi à des machines hydrauliques « simples » de type turbine.

## Revendications

1. Roue (R) de type Francis pour machine hydraulique (M) destinée à être traversée par un écoulement forcé d'eau (E), comportant :
- une couronne (1) à symétrie de révolution autour de l'axe de rotation (Z) de la roue (R) ;
- une pluralité d'aubes (21, 22) incurvées, solidaires de la couronne (1) et présentant chacune un bord périphérique externe (212, 222) et un bord central interne (211, 221) ;
**caractérisée en ce que** les points de raccordement (B₂₁, B₂₂) de la couronne (1) avec les bords centraux internes (211, 221) des aubes (21, 22) sont globalement situés sur un même cercle (C₂₀) centré sur ledit axe (Z) et **en ce que** les points de raccordement (A₂₁, A₂₂) de la couronne (1) avec les bords périphériques externes (212, 222) des aubes (21, 22) sont situés sur au moins deux cercles distincts (C₂₁, C₂₂) centrés sur ledit axe (Z).

2. Roue (R) selon la revendication 1, **caractérisée en ce que** les points de raccordement (A₂₁, A₂₂) de la couronne (1) avec les bords périphériques externes (212, 222) des aubes (21, 22) sont situés sur deux cercles distincts (C₂₁, C₂₂) centrés sur ledit axe (Z), des aubes dites longues (21) présentant des points de raccordement (A₂₁) situés sur un premier cercle (C₂₁), des aubes dites courtes (22) présentant des points de raccordement (A₂₂) situés sur un deuxième cercle (C₂₂) dont le diamètre (D₂₂) est inférieur au diamètre (D₂₁) du premier cercle.

3. Roue (R) selon la revendication 1 ou 2, **caractérisée en ce qu'**elle comporte, en outre, un plafond (12) à symétrie de révolution autour dudit axe (Z) et situé en regard de ladite couronne (1), les aubes (21, 22) étant solidaires du plafond (12), **en ce que** les points de raccordement (G₂₁, G₂₂) du plafond (12) avec les bords centraux internes (211, 221) des aubes (21, 22) sont situés sur un même cercle (C₄₀) centré sur ledit axe (Z) et **en ce que** les points de raccordement (F₂₁, F₂₂) du plafond (12) avec les bords périphériques externes (212, 222) des aubes (21, 22) sont situés sur au moins deux cercles distincts (C₄₁, C₄₂) centrés sur ledit axe (Z).

4. Roue (R) selon les revendications 2 et 3, **caractérisée en ce que** les points de raccordement (F₂₁, F₂₂) du plafond (12) avec les bords périphériques externes (212, 222) des aubes (21, 22) sont situés sur deux cercles distincts (C₄₁, C₄₂) centrés sur ledit axe (Z).

5. Roue (R) selon la revendication 2 et l'une des revendications 3 à 4, **caractérisée en ce que** les aubes courtes (22), d'une part, et les aubes longues (21), d'autre part, sont réparties régulièrement autour dudit axe (Z).

6. Roue (R) selon la revendication 2 et l'une des revendications 3 à 5, **caractérisée en ce qu'**elle comporte neuf aubes, dont six longues (21) et trois courtes (22), les aubes courtes (22) étant disposées sur la couronne (1) avec un écart angulaire (α₂₂) de 120°.

7. Roue selon la revendication 2 et l'une des revendications 3 à 5, **caractérisée en ce qu'**elle présente un nombre d'aubes pair et **en ce qu'**une aube sur deux est une aube courte.

8. Roue (R) selon la revendication 2 et l'une des revendications 3 à 7, **caractérisée en ce que** chaque aube courte (22) présente une longueur développée comprise entre 50% et 99% de la longueur développée d'une aube longue (21), de préférence entre 70% et 85%.

9. Machine hydraulique (M), **caractérisée en ce qu'**elle comprend une roue (R) selon l'une des revendications précédentes.

10. Installation (i) de conversion d'énergie, **caractérisée en ce qu'**elle est équipée d'au moins une machine hydraulique (M) selon la revendication 9.

## Claims

1. A wheel (R) of the Francis type for a hydraulic machine (M) designed to pass a forced flow of water (E), said wheel comprising:
· a band (1) that is circularly symmetrical about the axis of rotation (Z) of the wheel (R);
· a plurality of curved blades (21, 22) that are secured to or integral with the band (1) and each of which has an outside peripheral edge (212, 222) and an inside central edge (211, 221);
said wheel being **characterized in that** the connection points (B₂₁, B₂₂) at which the band (1) is connected to the inside central edges (211, 221) of the blades (21, 22) are substantially situated on a common Circle (C₂₀) that is centered on said axis (Z) and **in that** the connection points (A₂₁, A₂₂) at which the band (1) is connected to the outside peripheral edges (212, 222) of the blades (21, 22) are situated on at least two distinct circles (C₂₁, C₂₂) that are centered on said axis (Z).

2. A wheel (R) according to claim 1, **characterized in that** the connection points (A₂₁, A₂₂) at which the band (1) is connected to the outside peripheral edges (212, 222) of the blades (21, 22) are situated on two distinct circles (C₂₁, C₂₂) centered on said axis (Z), "long" blades (21) having connection points (A₂₁) situated on a first circle (C₂₁), and "short" blades (22) having connection points (A₂₂) situated on a second circle (C₂₂) of diameter (D₂₂) smaller than the diameter (D₂₁) of the first circle.

3. A wheel (R) according to claim 1 or claim 2, **characterized in that** it further comprises a crown (12) that is circularly symmetrical about said axis (Z) and that is situated facing said band (1), the blades (21, 22) being secured to or integral with the crown (12), **in that** the connection points (G₂₁, G₂₂) at which the crown (12) is connected to the inside central edges (211, 221) of the blades (21, 22) are situated on a common circle (C₄₀) centered on said axis (Z), and **in that** the connection points (F₂₁, F₂₂) at which the crown (12) is connected to the outside peripheral edges (212, 222) of the blades (21, 22) are situated on at least two distinct circles (C₄₁, C₄₂) that are centered on said axis (Z).

4. A wheel (R) according to claim 2 or claim 3, **characterized in that** the connection points (F₂₁, F₂₂) at which the crown (12) is connected to the outside peripheral edges (212, 222) of the blades (21, 22) are situated on two distinct circles (C₄₁, C₄₂) that are centered on said axis (z).

5. A wheel (R) according to claim 2 and to any one of claims 3 to 4, **characterized in that** the short blades (22) are distributed uniformly about said axis (Z) and the long blades (21) are distributed uniformly about said axis (Z).

6. A wheel (R) according to claim 2 and to any one of claims 3 to 5, **characterized in that** it has nine blades, including six long blades (21) and three short blades (22), the short blades (22) being disposed on the band (1) with angular spacing (α₂₂) of 120°.

7. A wheel (R) according to claim 2 and to any one of claims 3 to 5, **characterized in that** it has an even number of blades and **in that** every other blade is a short blade.

8. A wheel (R) according to claim 2 and to any one of claims 3 to 7, **characterized in that** each short blade (22) has a developed length lying in the range 50% of the developed length of a long blade (21) to 99% of the developed length of a long blade, and preferably in the range 70% of said developed length of a long blade to 85% of said developed length of a long blade.

9. A hydraulic machine (M), **characterized in that** it includes a wheel (R) according to any preceding claim.

10. An energy conversion installation (i), **characterized in that** it is equipped with at least one hydraulic machine (M) according to claim 9.

## Patentansprüche

1. Francis-Rad (R) für eine hydraulische Maschine (M), die dazu bestimmt ist, von einer erzwungenen Strömung von Wasser (E) durchströmt zu werden, welches aufweist:
- einen Kranz (1), der rotationssymmetrisch um die Drehachse (Z) des Rades (R) ist;
- mehrere gekrümmte Schaufeln (21, 22), die mit dem Kranz (1) fest verbunden sind und jeweils einen äußeren Umfangsrand (212, 222) und einen inneren zentralen Rand (211, 222) aufweisen;
**dadurch gekennzeichnet, dass** die Verbindungspunkte (B₂₁, B₂₂) des Kranzes (1) mit den inneren zentralen Rändern (211, 221) der Schaufein (₂₁, 22) sich Im Wesentlichen auf ein und demselben Kreis (C₂₀) befinden, der bezüglich der Achse (Z) zentriert ist, und dadurch, dass die Verbindungspunkte (A₂₁, A₂₂) des Kranzes (1) mit den äußeren Umfangsrändern (212, 222) der Schaufeln (21, 22) sich auf mindestens zwei verschiedenen Kreisen (C₂₁, C₂₂) befinden, die bezüglich der Achse (Z) zentriert sind.

2. Rad (R) nach Anspruch 1, **dadurch gekennzeichnet, dass** sich die Verbindungspunkte (A₂₁. A₂₂) des Kranzes (1) mit den äußeren Umfangsrändem (212. 222) der Schaufeln (21, 22) auf zwei verschiedenen Kreisen (C₂₁, C₂₂) befinden, die bezüglich der Achse (Z) zentriert sind, wobei so genannte lange Schaufeln (21) Verbindungspunkte (A₂₁) aufweisen, die sich auf einem ersten Kreis (C₂₁) befinden, und wobei so genannte kurze Schaufeln (22) Verbindungspunkte (A₂₂) aufweisen, die sich auf einem zweiten Kreis (C₂₂) befinden, dessen Durchmesser (D₂₂) kleiner als der Durchmesser (D₂₁) des ersten Kreises ist.

3. Rad (R) nach Anspruch 1 oder 2, **dadurch gekennzeichnet, dass** es außerdem eine Abdeckung (12) aufweiset, die rotationssymmetrisch um die Achse (Z) ist und sich gegenüber dem Kranz (1) befindet, wobei die Schaufeln (21, 22) mit der Abdeckung (12) fest verbunden sind, dadurch, dass die Verbindungspunkte (G₂₁, G₂₂) der Abdeckung (12) mit denninneren zentralen Rändern (211, 221) der Schaufeln (21, 22) sich auf ein und demselben Kreis (C₄₀) befinden, der bezüglich der Achse (Z) zentriert ist, und dadurch, dass die Verbindungspunkte (F₂₁, F₂₂) der Abdeckung (12) mit den äußeren Umfangsrändern (212, 222) der Schaufeln (21, 22) sich auf mindestens zwei verschiedenen Kreisen (C₄₁, C₄₂) befinden, die bezüglich der Achse (Z) zentriert sind.

4. Rad (R) nach den Ansprüchen 2 und 3, **dadurch gekennzeichnet, dass** sich die Verbindungspunkte (f₂₁, F₂₂) der Abdeckung (12) mit den äußereen Umfangsrändern (212, 222) der Schaufeln (21, 22) auf zwei verschiedenen Kreisen (C₄₁, C₄₂) befinden, die bezüglich der Achse (Z) zentriert sind.

5. Rad (R) nach Anspruch 2 und einem der Ansprüche 3 bis 4, **dadurch gekennzeichnet, dass** die kurzen Schaufeln (22) einerseits und die langen Schaufeln (21) andererseits gleichmäßig um die Achse (Z) herum verteilt sind.

6. Rad (R) nach Anspruch 2 und einem der Ansprüche 3 bis 5, **dadurch gekennzeichnet, dass** es neun Schaufeln aufweist, davon sechs lange (21) und drei kurze (22), wobei die kurzen Schaufeln (22) an dem Kranz (1) in einem Winkelabstand (α₂₂) von 120° angeordnet sind.

7. Rad nach Anspruch 2 und einem der Ansprüche 3 bis 5, **dadurch gekennzeichnet, dass** es eine gerade Anzahl von Schaufeln aufweist, undidadurch, dass jede zweite Schaufel eine kurze Schaufel ist.

8. Rad (R) nach Anspruch 2 und einem der Ansprüche 3 bis 7, **dadurch gekennzeichnet, dass** jede kurze Schaufel (22) eine gestreckte Länge aufweist, die zwischen 50 % und 99 % der gestreckten Länge einer langen Schaufel (21) beträgt, vorzugsweise zwischen 70 % und 85 %.

9. Hydraulische Maschine (M), **dadurch gekennzeichnet, dass** sie ein Rad (R) nach einem der vorhergehenden Ansprüche umfasst.

10. Anlage (I) zur Energieumwandlung, **dadurch gekennzeichnet, dass** sie mit mindestens einer hydraulischen Maschine (M) nach Anspruch 9 ausgerüstet ist.
